# EUROPEAN PATENT APPLICATION

(11) **EP 3 709 072 A1**
(43) Date of publication of application: **16.09.2020**
(21) Application number: 20158682.3
(22) Date of filing: 21.02.2020
(51) Int. Cl.: G02B 27/01, F21V 8/00, G02B 27/12

(54) **NEAR-EYE DISPLAY DEVICE**

(30) Priority: 14.03.2019 CN 201910191801
(71) Applicant: Coretronic Corporation, Hsin-Chu 300 (TW)
(72) Inventor: LO, Yi-Chien, 300 Hsin-Chu (TW)
(74) Representative: Ter Meer Steinmeister & Partner

(57) **Abstract**

A near-eye display device including a light engine, a first light waveguide and a second light waveguide is provided. The first light waveguide includes a plurality of first beam splitters arranged along a first direction. The second light waveguide is disposed in a light incident area at a side of the first light waveguide. The second light waveguide includes a plurality of second beam splitters arranged along a second direction. The first direction and the second direction determine a reference plane. A diameter of a stop of the light engine is P; a projection width of the first beam splitter on the reference plane is d1; a projection width of the second beam splitter on the reference plane is d2; and the diameter P of the stop, the projection width d1 and the projection width d2 satisfy the condition of P>1.5d2≧d1.

## Description

### BACKGROUND

### Technical Field

The disclosure relates to a display device, and more particularly to a near-eye display device.

### Description of Related Art

In the near-eye display field of augmented reality (AR), there are two main mechanisms for introducing image information into the human eye: the freeform prism and the waveguide. The main problem of using the freeform prism is the greater thickness and weight and the introduction of severe image distortion. In contrast, the structure using the waveguide plate is significantly thinner and lighter and has a larger eye box. However, although the structure of the waveguide plate does not introduce image distortion, it introduces many flaws in image display, such as ghosting, mirror image, uniformity reduction, chromatic aberration, etc. Currently, there are three main structures of waveguide plates, mainly including a holographic type, a surface relief grating type and a geometrical beam splitter type. The first two face more challenges in the limitations of the chromatic aberration and the influence on the ambient light than the geometrical beam splitter type waveguide plate.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the invention was acknowledged by a person of ordinary skill in the art.

### SUMMARY

The disclosure provides a near-eye display device that can improve brightness uniformity of an image.

Other objects and advantages of the disclosure will become apparent from the technical features disclosed herein. In order to achieve one or a part or all of the above or other objects, an embodiment of the disclosure provides a near-eye display device. The near-eye display device includes a light engine, a first light waveguide and a second light waveguide. The light engine is configured to provide an image. The first light waveguide is configured to reproduce an image of a view angle region in a first direction. The first light waveguide includes a plurality of first beam splitters arranged along the first direction. The second light waveguide is disposed in a light incident area at a side of the first light waveguide. The second light waveguide is configured to reproduce an image of a view angle region in a second direction. The second light waveguide includes a plurality of second beam splitters arranged along the second direction. The first direction and the second direction determine a reference plane.

Preferably, a diameter of a stop of the light engine is P; a projection width of the first beam splitter on the reference plane is d1; a projection width of the second beam splitter on the reference plane is d2; and the diameter P of the stop, the projection width d1 and the projection width d2 satisfy the condition of P>1.5d2≧d1.

Preferably, the second light waveguide may be provided with two second beam splitters in an area corresponding to the stop of the light engine
Preferably, a light-outputting effective area of the second light waveguide may not comprise the two second beam splitters.

Preferably, the two second beam splitters may comprise a second beam splitter having a reflectance of 100% and a second beam splitter having a reflectance of 50% and a transmittance of 50%.

Preferably, the image transmitted to the second beam splitter having the reflectance of 100% may be reflected to the second beam splitter having the reflectance of 50% and the transmittance of 50%.

Preferably, the second light waveguide may be provided with two second beam splitters in an area corresponding to the stop of the light engine.

Preferably, one of the two second beam splitters may be a polarization beam splitter.

Preferably, a light-outputting effective area of the second light waveguide may comprise the polarization beam splitter and may not comprise the other of the two second beam splitters.

Preferably, the near-eye display device may further comprise a half wave plate disposed between the stop of the light engine and the polarization beam splitter of the second light waveguide.

Preferably, the image provided by the light engine may have a first polarization state.

Preferably, the image having the first polarization state may be directly transmitted to one of the two second beam splitters without passing through the half wave plate.

Preferably, the second beam splitter may have a first reflectance of 100% and may reflect the image having the first polarization state to the polarization beam splitter.

Preferably, the image having the first polarization state may pass through the half wave plate and may be converted into the image having a second polarization state.

Preferably, the image having the second polarization state may be further transmitted to the polarization beam splitter.

Preferably, the polarization beam splitter may have a first reflectance Ra, a second reflectance Rb, a first transmittance Ta, and a second transmittance Tb.

Preferably, the first reflectance Ra, the second reflectance Rb, the first transmittance Ta, and the second transmittance Tb may satisfy the conditions of Rb=Ta and Tb=Ra.

Preferably, the image provided by the light engine may enter the second light waveguide and may be guided to the light incident area of the first light waveguide via the second beam splitters.

Preferably, the image may enter the first light waveguide from the light incident area and may be guided to a projection target by the first beam splitters.

Based on the above, the near-eye display device of the embodiments of the disclosure has a two-dimensional geometrical waveguide plate structure which can improve the brightness uniformity of the image.

Other objectives, features and advantages of the present invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic view of a near-eye display device according to an embodiment of the disclosure.
FIG. 2 is a schematic top view of the near-eye display device of the embodiment of FIG. 1.
FIG. 3 is a schematic side view of the light engine and the second light waveguide of the embodiment of FIG. 1.
FIG. 4 is a schematic side view of a near-eye display device according to another embodiment of the disclosure.
FIG. 5 is a schematic view of an output image of the embodiment of FIG. 4.
FIG. 6 is a schematic view of an output image of a related example of the disclosure.
FIG. 7 is a schematic side view of a near-eye display device according to another embodiment of the disclosure.

### DESCRIPTION OF THE EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the present invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

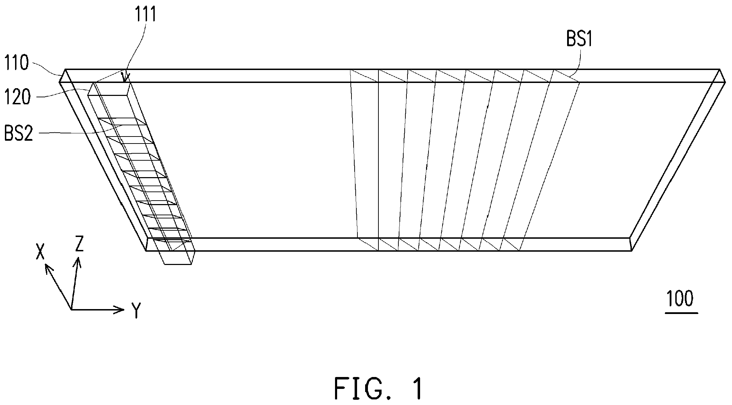

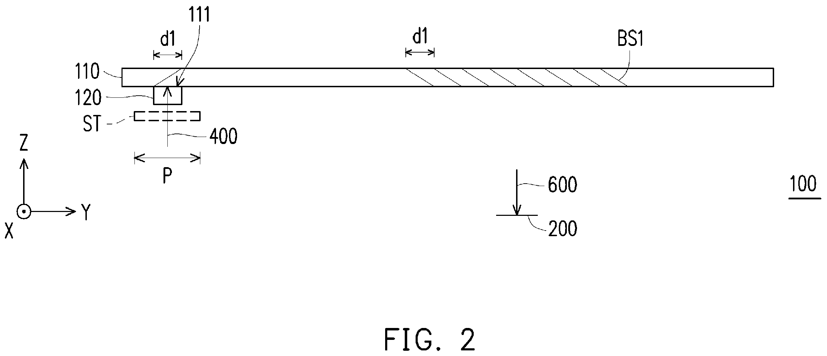

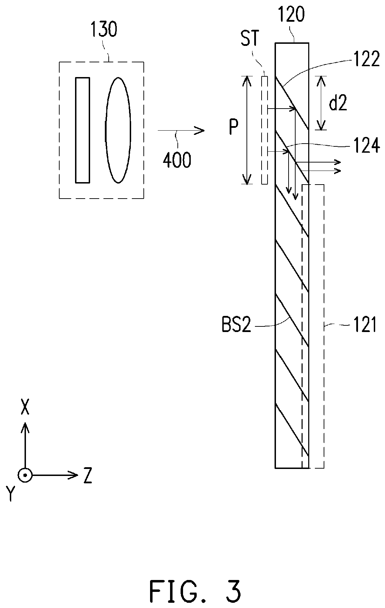

FIG. 1 is a schematic view of a near-eye display device according to an embodiment of the disclosure. FIG. 2 is a schematic top view of the near-eye display device of the embodiment of FIG. 1. FIG. 3 is a schematic side view of the light engine and the second light waveguide of the embodiment of FIG. 1. With reference to FIGs. 1 to 3, a near-eye display device 100 of the embodiment includes a light engine 130, a first light waveguide 110 and a second light waveguide 120. FIG. 1 illustrates a two-dimensional waveguide plate structure for improving the brightness uniformity of an image. In the embodiment, the near-eye display device 100 projects an image 600 onto a projection target 200, such as an eye pupil of a user.

In the embodiment, the light engine 130 is configured to provide an image 400. The first light waveguide 110 is configured to reproduce an image of a view angle region in a first direction Y. The first light waveguide 110 includes a plurality of first beam splitters BS1 arranged along the first direction Y, and the first beam splitters BS1 are spaced apart from each other between the two opposite surfaces of the first light waveguide 110. The second light waveguide 120 is disposed in a light incident area 111 at a side of the first light waveguide 110. The second light waveguide 120 is configured to reproduce an image of a view angle region in a second direction X. The second light waveguide 120 includes a plurality of second beam splitters BS2 arranged along the second direction X. The first direction Y and the second direction X are perpendicular to each other. The first direction Y and the second direction X determine a reference plane, that is, an XY plane. The reference plane (XY plane) is perpendicular to a third direction Z. A diameter of a stop ST of the light engine 130 is P; a projection width of the first beam splitter BS1 on the XY plane is d1; a projection width of the second beam splitter BS2 on the XY plane is d2; and the diameter P of the stop, the projection width d1 and the projection width d2 satisfy the condition of P>1.5d2≧d1. In more detail, the light incident area 111 of the first light waveguide 110 corresponds to at least one first beam splitter BS1 (shown as one), and the first beam splitter covered by the light incident area 111 has an oblique direction opposite to that of the other first beam splitters. The oblique direction of the first beam splitters BS1 is the oblique relationship between the first beam splitters BS1 and a surface of the side of the first light waveguide 110; that is, the oblique direction of the first beam splitter covered by the light incident area 111 is configured to guide the image from the second light waveguide 120 to the other first beam splitters BS1, and the oblique direction of the other first beam splitters BS1 is configured to guide the received image to the outside of the first light waveguide 110 and direct the received image to the projection target 200. The second beam splitters BS2 are disposed parallel to each other and spaced apart from each other between the two opposite surfaces of the second light waveguide 120. The image provided by the light engine 130 enters the second light waveguide 120 and is guided to the light incident area 111 of the first light waveguide 110 via the second beam splitters BS2. The image enters the first light waveguide 110 from the light incident area 111 and is guided to the projection target 200 through the first beam splitters BS1.

In the embodiment, the stop ST of the light engine 130 is located approximately at a light incident surface of the second light waveguide 120, and the second light waveguide 120 is provided with two second beam splitters 122 and 124 in an area corresponding to the stop ST of the light engine 130. That is, the second beam splitters 122 and 124 may simultaneously receive the image 400 from the light engine 130. As shown in FIG. 3, the second beam splitter 122 and the second beam splitter 124 are sequentially disposed in the opposite direction of the second direction X. The second beam splitter 122 is, for example, a beam splitter having a reflectance of 100% and can totally reflect the image 400 to the second beam splitter 124. In other embodiments, the second beam splitter 122 having the reflectance of 100% may be replaced with a reflecting mirror, and any optical component capable of totally reflecting the image 400 from the light engine 130 to the second beam splitter 124 may be used; the disclosure is not limited to the above. The second beam splitter 124 is, for example, a beam splitter having a reflectance of 50% and a transmittance of 50%. The second beam splitter 124 may receive the image 400 from the second beam splitter 122 so that the image 400 is partially transmitted and partially reflected. The second beam splitter 124 may directly receive the image 400 from the light engine 130 so that the image 400 is partially transmitted and partially reflected. A light-outputting effective area 121 of the second light waveguide 120 does not include the second beam splitters 122 and 124. As shown in FIG. 3, the part of the image transmitting through the second beam splitters 122 and 124 is not guided by the first light waveguide and does not enter the eye pupil. According to the two-dimensional waveguide plate structure of the embodiment of FIGs. 1 to 3, the near-eye display device 100 can eliminate the clear ghosting stray light in the light field system observed in off-axis places when the human eye drifts away, thereby improving the brightness uniformity of the image.

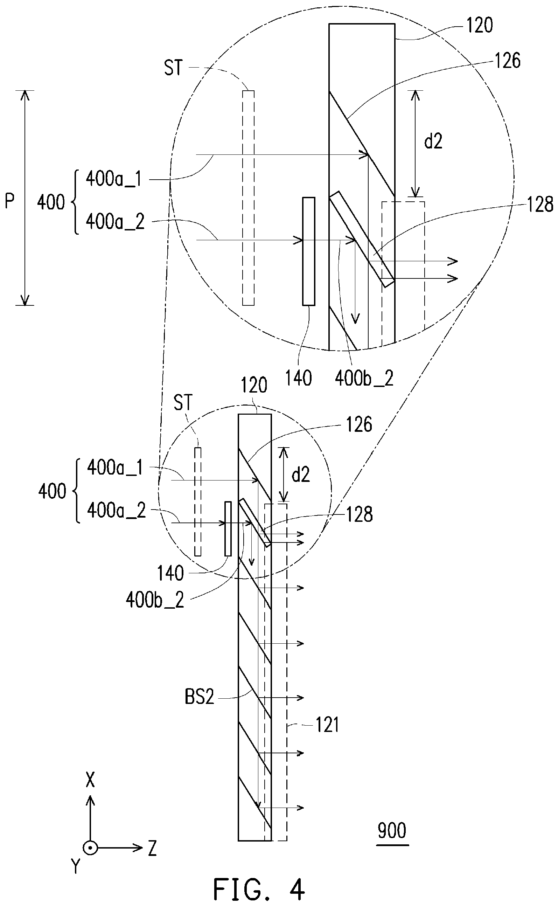

FIG. 4 is a schematic side view of a near-eye display device according to another embodiment of the disclosure. With reference to FIG. 4, a near-eye display device 900 of the embodiment further includes a half wave plate 140. The half wave plate 140 is disposed between the stop ST of the light engine 130 (shown in FIG. 3) and the light incident surface of the second light waveguide 120. In the embodiment, the light engine 130 provides the image 400 (400a_1, 400a_2) having a first polarization state. In the embodiment, the second light waveguide 120 is provided with two second beam splitters 126 and 128 in an area corresponding to the stop ST of the light engine 130 (shown in FIG. 3). That is, the second beam splitters 126 and 128 may simultaneously receive the image 400 from the light engine 130 (shown in FIG. 3), as shown in FIG. 4. The second beam splitter 126 and the second beam splitter 128 are sequentially disposed in the opposite direction of the second direction X, and the second beam splitter 128 is, for example, a polarization beam splitter. The half wave plate 140 is disposed between the second beam splitter 128 (polarization beam splitter) and the light engine 130 (shown in FIG. 3) and does not correspond to the second beam splitter 126, and the image 400 having the first polarization state includes an image 400a_1 directly transmitted to the second beam splitter 126 and an image 400a_2 transmitted to the half wave plate 140. The half wave plate 140 converts the image 400a_2 having the first polarization state into an image 400b_2 having a second polarization state and then transmits it to the second beam splitter 128 (polarization beam splitter). In the embodiment, the first polarization state is, for example, a p-polarization state, and the second polarization state is, for example, an s-polarization state. In other embodiments, the first polarization state is, for example, an s-polarization state, and the second polarization state is, for example, a p-polarization state.

In the embodiment, the second beam splitter 126 has a first reflectance Ra of 100% and reflects the image 400a_1 having the first polarization state to the second beam splitter 128. The first reflectance Ra refers to the reflectance of the beam splitter for a beam or image having the first polarization state. In other embodiments, the second beam splitter 126 having the first reflectance Ra of 100% may be replaced with a reflecting mirror, and any optical component capable of totally reflecting the image 400a_1 having the first polarization state to the second beam splitter 128 may be used; the disclosure is not limited to the above.

In the embodiment, the second beam splitter 128 (polarization beam splitter) has a first reflectance Ra, a second reflectance Rb, a first transmittance Ta, and a second transmittance Tb. The first reflectance Ra, the second reflectance Rb, the first transmittance Ta, and the second transmittance Tb satisfy the conditions of Rb=Ta and Tb=Ra. The second reflectance Rb refers to the reflectance of the beam splitter for a beam or image having the second polarization state. The first transmittance Ta refers to the transmittance of the beam splitter for a beam or image having the first polarization state. The second transmittance Tb refers to the transmittance of the beam splitter for a beam or image having the second polarization state. Therefore, the second beam splitter 128 may receive the image 400a_1 from the second beam splitter 126 so that the image 400a_1 is partially transmitted and partially reflected. The second beam splitter 128 may directly receive the image 400b_2 from the half wave plate 140 so that the image 400b_2 is partially transmitted and partially reflected. The light-outputting effective area 121 of the second light waveguide 120 includes the second beam splitter 128 (polarization beam splitter) and other second beam splitters BS2 but does not include the second beam splitter 126, as shown in FIG. 4. That is, the part of the image 400a_1 reflected by the second beam splitter 128 and the part of the image 400b_2 transmitting through the second beam splitter 128 are guided by the first light waveguide and enter the eye pupil.

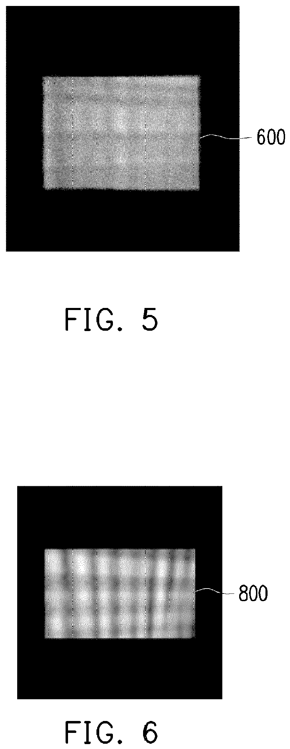

FIG. 5 is a schematic view of an output image of the embodiment of FIG. 4. FIG. 6 is a schematic view of an output image of a related example of the disclosure. With reference to FIGs. 5 to 6, an output image 600 shown in FIG. 5 is, for example, an image 600 output from the first light waveguide 110 to the projection target 200, as shown in FIG. 2.

In the embodiment of FIG. 4, the near-eye display device 900 further includes the half wave plate 140, and the reflectance and transmittance of the second beam splitters 126 and 128 adopt the design manner described in the embodiment of FIG. 4. Therefore, the overall brightness of the output image 600 of FIG. 5 is more uniform than the brightness of an output image 800 of the related example of FIG. 6. Therefore, according to the two-dimensional waveguide plate structure of the embodiment of FIG. 4, the near-eye display device 900 can eliminate the clear ghosting stray light in the light field system observed in off-axis places when the human eye drifts away, thereby improving the brightness uniformity of the image.

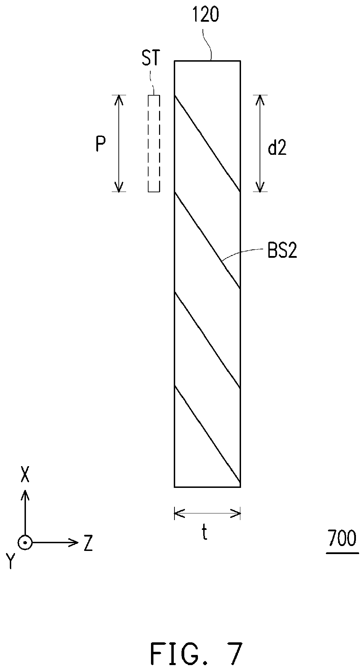

FIG. 7 is a schematic side view of a near-eye display device according to another embodiment of the disclosure. With reference to FIG. 7, in a near-eye display device 700 of the embodiment, the diameter of the stop of the light engine 130 is P; the projection width of the first beam splitter BS1 on the XY plane is d1 (as shown in the first light waveguide 110 shown in FIG. 2); the projection width of the second beam splitter on the XY plane is d2; and the diameter P of the stop, the projection width d1 and the projection width d2 satisfy the condition of P=d2≧1.5d1. In addition, as shown in FIG. 7, the stop ST of the light engine corresponds to one of the second beam splitters BS2 in the second light waveguide 120. That is, the diameter P of the stop ST is equal to the projection width d2 of the second beam splitter on the XY plane, and thus the second light waveguide 120 has a greater thickness t correspondingly. Therefore, according to the two-dimensional waveguide plate structure of the embodiment of FIG. 7, the near-eye display device 700 can eliminate the clear ghosting stray light in the light field system observed in off-axis places when the human eye drifts away, thereby improving the brightness uniformity of the image.

In summary, the embodiments of the disclosure have at least one of the following advantages or effects. In the embodiments of the disclosure, the near-eye display device has a two-dimensional waveguide plate structure including two light waveguides, and the diameter of the stop of the light engine, the projection width of the first beam splitter on the reference plane, and the projection width of the second beam splitter on the reference plane satisfy the preset design conditions. Therefore, in the structures of the embodiments of the disclosure, the brightness uniformity of the image can be improved.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. A near-eye display device (100), comprising:
a light engine(130) configured to provide an image;
a first light waveguide (110) configured to reproduce an image of a view angle region in a first direction (Y) and comprising a plurality of first beam splitters (BS1) arranged along the first direction; (Y) and
a second light waveguide (120) disposed in a light incident area (111) at a side of the first light waveguide (110), configured to reproduce an image of a view angle region in a second direction (X) and comprising a plurality of second beam splitters (BS2) arranged along the second direction (X), wherein the first direction (Y) and the second direction (X) determine a reference plane.

2. The near-eye display device of claim 1, wherein a diameter of a stop (ST) of the light engine (130) is P, a projection width of the first beam splitter (BS1) on the reference plane is d1, a projection width of the second beam splitter (BS2) on the reference plane is d2, and the diameter P of the stop (ST), the projection width d1 and the projection width d2 satisfy the condition of P>1.5d2≧d1.

3. The near-eye display device of claim 1 or 2, **characterized in that** the second light waveguide (120) is provided with two second beam splitters (122, 124) in an area corresponding to the stop (ST) of the light engine (130).

4. The near-eye display device of claim 3, wherein a light-outputting effective area (121) of the second light waveguide (120) does not comprise the two second beam splitters (122, 124).

5. The near-eye display device of claim 2, 3 or 4, **characterized in that** the two second beam splitters (BS2) comprise a second beam splitter (122) having a reflectance of 100% and a second beam splitter (124) having a reflectance of 50% and a transmittance of 50%.

6. The near-eye display device of claim 5, wherein the image transmitted to the second beam splitter (122) having the reflectance of 100% is reflected to the second beam splitter (124) having the reflectance of 50% and the transmittance of 50%.

7. The near-eye display device of any one of the preceding claims 1-3, wherein one of the two second beam splitters is a polarization beam splitter (128).

8. The near-eye display device of claim 7, wherein a light-outputting effective area (121) of the second light waveguide (120) comprises the polarization beam splitter (128) and does not comprise the other (126) of the two second beam splitters.

9. The near-eye display device of claim 7 or 8, **characterized in that** the near-eye display device (900) further comprises a half wave plate (140) disposed between the stop (ST) of the light engine (130) and the polarization beam splitter (128) of the second light waveguide (120).

10. The near-eye display device of claim 9, wherein the image provided by the light engine (130) has a first polarization state.

11. The near-eye display device of claim 9 or 10, **characterized in that** the image (400a_1) having the first polarization state is directly transmitted to one (126) of the two second beam splitters without passing through the half wave plate (140), and the second beam splitter (126) has a first reflectance of 100% and reflects the image (400a_1) having the first polarization state to the polarization beam splitter (128).

12. The near-eye display device of claim 11, **characterized in that** the image (400a_1) having the first polarization state passes through the half wave plate (140) and is converted into the image (400b_2) having a second polarization state.

13. The near-eye display device of claim 12, wherein the image (400b_2) having the second polarization state is further transmitted to the polarization beam splitter (128).

14. The near-eye display device of claim 13, wherein the polarization beam splitter (128) has a first reflectance Ra, a second reflectance Rb, a first transmittance Ta, and a second transmittance Tb, wherein the first reflectance Ra, the second reflectance Rb, the first transmittance Ta, and the second transmittance Tb satisfy the conditions of Rb=Ta and Tb=Ra.

15. The near-eye display device of any one of the preceding claims, **characterized in that** the image provided by the light engine (130) enters the second light waveguide (120) and is guided to the light incident area (111) of the first light waveguide (110) via the second beam splitters (BS2), and the image enters the first light waveguide (110) from the light incident area (111) and is guided to a projection target (200) by the first beam splitters (BS1).
